# EUROPEAN PATENT SPECIFICATION

(11) **EP 0 981 427 B1**
(45) Date of publication and mention of the grant of the patent: **01.08.2007**
(21) Application number: 98919356.0
(22) Date of filing: 30.04.1998
(51) Int. Cl.: B29B 11/16, B29B 15/10

(54) **PREFORMS FOR MOULDING PROCESS AND RESINS THEREFOR**
ROHLINGE FÜR FORMVERFAHREN UND HARZE DAFÜR
PREFORMES DESTINEES A UN PROCEDE DE MOULAGE ET RESINES UTILISEES A CETTE FIN

(30) Priority: 06.05.1997 GB 9709166
(43) Date of publication of application: 01.03.2000
(73) Proprietor: CYTEC TECHNOLOGY CORP., Wilmington, Delaware 19801 (US)
(72) Inventor: MORTIMER, Stephen, Mancot Deeside Clwyd CH5 2AJ (GB); COPPOCK, Vincent, Bunbury Cheshire CW6 95J (GB)
(74) Representative: Bowman, Paul Alan
(86) International application number: PCT/GB1998/001268
(87) International publication number: WO 1998/050211

(56) References cited:
- WO-A-94/26493
- WO-A-96/37354
- DE-A- 2 941 785
- DE-A- 3 416 855
- DE-A- 3 824 705
- US-A- 4 962 162
- US-A- 5 057 353
- US-A- 5 120 823
- US-A- 5 480 603
- DATABASE WPI Week 9027 Derwent Publications Ltd., London, GB; AN 90-204895 XP002073907 & JP 02 135 229 A (IND TECHN RES INST) , 24 May 1990

## Description

The present invention relates to preforms for resin transfer moulding (RTM) processes and to binders for use therein.

Various moulding processes, such as RTM processes involve loading dry fibrous reinforcement layers into a mould, closing the mould, introducing a thermosetting resin composition into the mould and curing the resin typically via the application of heat. One of the process constraints in such a process is loading the fibrous reinforcement into the mould. The individual layers of fabrics must be cut and shaped to conform to the various curvatures in the mould. This can be very time consuming and difficult to do, especially for layups involving foam cores or other core materials. It would be desirable to assemble the fibrous reinforcement outside of the mould and load only that structure (or preform) into the mould at one time.

Preforms used for composite preparation are typically composed of multiple layers of fibrous material. These are assembled in a stack and shaped prior to placing onto a mould surface for impregnation with matrix resin. Known methods for preparing the dry preform layers for moulding involve stacking multiple layers of the woven or stitched fabric material with the desired fibre orientation, and then stitching or stapling the layers of material together. This is to maintain uniform fibre alignment and stabilise the fabric to prevent fraying.

The stack of material is then cut, outside of the stitching or stapling, to the desired preformed shape. The preform is then placed in a mould and resin injected to impregnate the fabric. These methods for preform stabilisation however, are limited to two-dimensional (flat) structures and the stack of material cannot be shaped to conform to a complex parts contour without disturbing the stitching or stapling and/or causing fibre misalignment. If attempts are made to bend the preform, for example, to form a curved surface, the layers may separate or tear at the stitching.

The production of complex, three dimensional preforms may involve three dimensional weaving and braiding. These methods are quite labour intensive, increasing the cost for producing a complex shaped part.

Another method for stabilising a preform involves spraying an adhesive e.g. a hot melt adhesive, onto the surface of the layers to hold them together. Usually, the dry fabric is coated in discrete areas with a thin layer of the liquified thermoplastic polymer or alternatively, a fibrous polymer is placed between the layers and heat applied to melt the polymer to provide adhesive characteristics. Such preforms are then contoured in a preforming mould to conform to the required complex shape by melting and resolidification of the polymer. This is achieved by the selective application and removal of an external heat source, e.g. a hot air gun. This is a highly labour intensive operation.

Since the hot melt adhesive is a thermoplastic polymer, it has several disadvantages. First, the binder may not sufficiently wet the fibres to hold the adjacent layers together to maintain a shape after forming. Thus, if the preform is handled, such as during loading into the mould, it is possible that the fibre layers will shift. Also, such a thermoplastic material may detract from the cured mechanical performance of the thermosetting matrix resin systems typically used to produce components via a resin transfer moulding process. During injection, the thermoplastic binder forms localised pockets within the component which inhibit or prevent thermoset resin infiltration, reducing component strength. Thus, to form complex composite articles utilising hot melt binder requires sacrificing part strength and Tg.

US-A-4992228 discloses a method for preparing preforms which comprises (1) applying substantially evenly onto the surface of each of one or more plies of an unimpregnated substrate material one or more non-sintering thermoplastic-like resinous compounds which are substantially free of any compound which would serve as a crosslinker for said thermoplastic, said resinous compound being in the form of a powder having a particle size less than about 500 microns and having a melting point as determined by Differential Scanning Calorimetry from about 50°C to about 70°C, in an amount of from about 3 to about 5 percent by weight based upon the weight of said substrate material; (2) fusing said powdered thermoplastic-like resinous compound on the surface of said substrate material; (3) cooling said resinous material; (4) assembling one or more plies of the thus treated substrate material and conforming said plies of said treated substrate material into a desired shape; (5) subjecting the thus shaped plies of treated substrate material at a temperature sufficient to melt said resinous compound; and (6) cooling said shaped treated plies of substrate material to a temperature below the melting point of said resinous compound; thereby forming a preshaped preform for use in moulding processes as reinforcing material.

US-A-5080857 discloses a method of moulding using a stabilised preform comprising the steps of:
(a) providing a plurality of oriented fibre layers,
(b) stacking the layers,
(c) applying a solid uncatalysed thermosetting resin between each layer,
(d) placing the stacked layers over a mould surface having a desired preform shape,
(e) forming the layers over the mould surface,
(f) heating the layers to melt the resin and lightly fuse the layers together,
(g) cooling to rigidify the layers to form a preform, and
(h) impregnating the preform with a thermosetting resin matrix containing a catalyst at a temperature at which the solid uncatalysed thermosetting resin will melt and mix with the resin matrix to catalyse the melted uncatalysed thermosetting resin therewith.

US-A-5427725 discloses a process to make a matrix composite comprising the steps of:
(1) contacting a reinforcing substrate with a tackifier, which contains either: (a) a single resin that is capable of at least partially curing with itself; or (b) a mixture containing resin and hardener that is capable of at least partially curing, at a temperature and for a time sufficient to partially cure the tackifier so that it adheres to the substrate but remains thermoplastic-like, and capable of further reaction, whereby a preform is made;
(2) placing one or more layers of the preform in a mould;
(3) injecting a second curable resin or resin composition that is capable of reacting with the tackifier, into the mould to impregnate the preform; and
(4) curing the tackifier and matrix resin, whereby a composite is formed.

The processes of US-A-5080857 and 5427725 are an improvement in terms of compatibility with the moulding resin.

GB 2007676, GB 2182074, EP 0309221, EP 0297674, WO89/04335, US 5,532,296 and US 4,377,657 disclose resin compositions which are suitable for use in various moulding processes. However, none of these resins are disclosed as being useful for resin transfer moulding and most are liquids or tacky at room temperature prior to curing.

US 4,757,120 discloses polyimide polymers which are reaction products of active methylene compounds and N,N'-bismaleimide derivatives are improved by incorporating them with 2 to 15% by weight of a polyethersulfone polymer. The polymer blend is useful in producing films, mouldings, prepegs, laminates and filled composites which are particularly useful in structural components which have stability at high temperatures.

DE 2941785 discloses composite materials consisting of reinforcing fibres and a temperature resistant flameproof binder in which the binder used is a hybrid matrix consisting of a soluble thermoplastic high polymer and a thermosetting resin. The composites may be made by producing films of the hybrid matrix, producing prepregs of the fibres and the hybrid matrix by dipping the fibres in a solution of the hybrid matrix and thereafter laminating alternately layered hybrid matrix films and prepregs under heat and pressure.

WO96/37354 discloses a tackifier for making tackified substrates which contains: (a) at least one epoxy resin, and (b) at least one curing agent for the epoxy resin, but (c) not catalytic amount of catalyst for the reaction between the epoxy resin and the curing agent. The tackified substrates are used to make composites by: (1) placing one or more of the tackified substrates in a mold; (2) injecting into the mold a matrix resin formulation which is chemically-similar to the tackifier, except that it contains a catalytic amount of catalyst for the reaction between the epoxy resin and the curing agent; and (3) curing the matrix resin formulation. The tackifiers are more storage-stable than similar tackifiers which contain catalyst, and the resulting composites have and/or retain physical properties better than composites made using tackifiers without curing agent.

The present invention provides an improved preform binder resin for preform manufacture for use in resin transfer moulding.

According to one aspect of the present invention there is provided binder coated fibres for use in making a preform for resin transfer moulding the binder coated fibres comprising from 80 to 99% by weight reinforcing fibres and from 1 to 20% by weight of a preform binder resin, said binder resin being in the form of particles or discrete areas on the surface of the reinforcing fibres, said binder resin being non-tacky at ambient temperature, having a softening point in the range 50 to 150°C and being heat curable at a temperature in the range 50 to 200°C, characterised in that the binder resin comprises:
from 40 to 90% by weight of the binder resin of a thermosetting resin and
from 10 to 60% by weight of the binder resin of a high molecular weight engineering thermoplastic and/or an elastomer selected from vinyl addition polymer, fluoroelastomers and polysiloxane elastomers,
the engineering thermoplastic/elastomer being dissolved in the thermosetting resin, whereby the binder coated fibres may be draped and stacked and heated to a temperature in the range 50 to 150°C to melt the binder resin and fuse fibres together to form a consolidated preform and said preform may be used in transfer moulding to provide a product having toughness imparted by the presence of said high molecular weight engineering thermoplastic and/or elastomer.

The invention utilises a preform binder resin which comprises a thermosetting resin having an engineering thermoplastic and/or elastomer dissolved therein. The preform binder resin is a non-tacky solid at ambient temperature. The resin may be in the form of a non-agglomerating, free-flowing powder, generally having a particle size below 1500µm and typically having an average particle size in the range 100 to 500m. The particulate binder may be applied to reinforcing fibres and heated to soften the particles causing the powder to adhere to the fibres. Alternatively, the binder resin may be applied to the reinforcing fibres from solution by spraying, printing etc., such that upon evaporation of the solvent particles, discrete areas or islands of binder resin are formed. A continuous coating of binder resin is not desired since it deleteriously affects the drapability of the fibres. The binder coating of the invention may be in the form of a woven or non woven fabric which has fibres and good drapability and may readily be stacked and shaped and bonded by application of heat to a temperature in the range 60 to 120°C to make a preform.

The thermosetting resin is selected to be the same as or fully compatible with the matrix resin to be used in the RTM process. The presence of the dissolved thermoplastic/elastomer provides the solid characteristics and softening point properties to the binder resin and also imparts desirable properties to the finished moulded articles, in particular the toughness of the article is improved. It is known that the presence of a high molecular weight thermoplastic resin may improve the toughness of matrix resins used in RTM. However, it is not readily possible to incorporate the thermoplastic resin in the matrix resin since the presence of dissolved thermoplastic resin increases the viscosity of the matrix resin such that it will not readily flow through the reinforcing fibres during the moulding process. The presence of undissolved particulate thermoplastic resin in the matrix resin is not practical since the particulate resin is filtered by the reinforcing fibres during injection of the matrix resin. The binder coated fibres of the invention introduce the thermoplastic resin throughout the preform and hence throughout the moulded article. This is in a manner which readily improves the toughness of the moulded article without deleteriously effecting the drapability of the fabrics used in preparing the preform.

The thermosetting resins used in the invention may be selected from a wide range of resins useful in moulding applications, including but not limited to bismaleimide resins (BMI), cyanate resins and epoxy resins.

Bismaleimide resins are heat-curable resins containing the maleimido group as the reactive functionality. The term bismaleimide as used herein includes mono-, bis-, tris-, tetrakis-, and higher functional maleimides and their mixtures as well, unless otherwise noted. Bismaleimide resins with an average functionality of about two are preferred. Bismaleimide resins as thusly defined are prepared by the reaction of maleic anhydride or a substituted maleic anhydride such as methylmaleic anhydride, with an aromatic or aliphatic di- or polyamine. Examples of the synthesis may be found, for example in U.S. Patent Nos. 3,018,290, 3,018,292, 3,627,780, 3,770,691, and 3,839,358. The closely related nadicimide resins, prepared analogously from a di- or polyamine but wherein the maleic anhydride is substituted by a Diels-Alder reaction product of maleic anhydride or a substituted maleic anhydride with a diene such as cyclopentadiene, are also useful. As used herein and in the claims, the term bismaleimide shall include the nadicimide resins.

Preferred di- or polyamine precursors include aliphatic and aromatic diamines. The aliphatic diamines may be straight chain, branched, or cyclic, and may contain heteroatoms. Many examples of such aliphatic diamines may be found in the above cited references. Especially preferred aliphatic diamines are hexanediamine, octanediamine, decanediamine, dodecanediamine, and trimethylhexanediamine.

The aromatic diamines may be mononuclear or polynuclear, and may contain fused ring systems as well. Preferred aromatic diamines are the phenylenediamines; the toluenediamines; the various methylenedianilines, particularly 4,4'-methylenedianiline; the napthalenediamines; the various amino-terminated polyarylene oligomers corresponding to or analogous to the formula H₂N-Ar[X-Ar]ₙNH₂, wherein each Ar may individually be a mono- or poly-nuclear arylene radical, each X may individually be -O-, -S-, -CO₂-, -SO₂-_{'} -O-CO-, C₁-C₁₀ lower alkyl, C₁-C₁₀ halogenated alkyl, C₂-C₁₀ lower alkyleneoxy, aryleneoxy, polyoxyalkylene or polyoxyarylene, and wherein n is an integer of from about 1 to 10; and primary aminoalkyl terminated di- and polysiloxanes.

Particularly useful are bismaleimide "eutectic" resin mixtures containing several bismaleimides. Such mixtures generally have melting points which are considerably lower than the individual bismaleimides. Examples of such mixtures may be found in U.S. Patent Nos. 4,413,107 and 4,377,657. Several such eutectic mixtures are commercially available.

Cyanate resins are heat-curable resins whose reactive functionality is the cyanate, or -OCN group. These resins are generally prepared by reacting a di- or poly-functional phenolic compound with a cyanogen halide, generally cyanogen chloride or cyanogen bromide. The method of synthesis by now is well known to those skilled in the art, and examples may be found in U.S. Patent Nos. 3,448,079, 3,553,244 and 3,740,348. The products of this reaction are the di- and polycyanante esters of the phenols.

The cyanate ester prepolymers may be prepared by the heat treatment of cyanate functional monomers either with or without a catalyst. The degree of polymerisation may be followed by measurement of the viscosity. Catalysts may be used to assist the polymerisation. Such prepolymers and catalysts are known in the art.

Suitable cyanate resins are commercially available and may be prepared from mono-, di-, and polynuclear phenols, including those containing fused aromatic structures. The phenols may optionally be fused aromatic structures. The phenols may optionally be substituted with a wide variety of organic radicals including, but not limited to halogen, nitrol, phenoxy, acyloxy, acyl, cyano, alkyl, aryl, alkaryl, cycloalkyl, and the like. Alkyl substituents may be halogenated, particularly perchlorinated and perfluorinated. Particularly preferred alkyl substituents are methyl and trifluoromethyl.

Particularly preferred phenols are the mononuclear diphenols such as hydroquinone and resorcinol; the various bisphenols, such as bisphenol A, bisphenol F, and bisphenol S; the various dihydroxynapthalenes; and the oligomeric phenol and cresol derived novolacs. Substituted varieties of these phenols are also preferred. Other preferred phenols are the phenolated dicyclopentadiene oligomers prepared by the Friedel-Crafts addition of phenol or a substituted phenol to dicyclopentadiene as taught in U.S. Patent No. 3, 536, 734 .

Epoxy resins may also be utilised alone or as comonomers in the cyanate functional or bismaleimide functional resin systems of the subject invention. Epoxy resins are thermosetting resins containing the oxirane, or epoxy group as the reactive functionality. The oxirane group may be derived from a number of diverse methods of synthesis, for example by the reaction of an unsaturated compound with a peroxygen compound such as peracetic acid; or by reaction of epichlorohydrin with a compound having an active hydrogen, followed by dehydrohalogenation. Methods of synthesis are well known to those skilled in the art, and may be found, for example, in the Handbook of Epoxy Resins, Lee and Neville, Eds., McGrawHill, 1967, in chapters 1 and 2 and in the references cited therein.

The epoxy resins useful in the practice of the subject invention are generally those that are commercially available and substantially di- or polyfunctional resins. In general, the functionality should be from about 1.8 to about 8. Many such resins are available commercially. Particularly useful are the epoxy resins which are derived from epicholorohydrin. Examples of such resins are the di- and polyglycidyl derivatives of the bisphenols, such as bisphenol A, bisphenol F, and bisphenol S; the dihydroxynaphthalenes, for example 1,4-, 1,6-, 1,7-, 2,5-, 2,6- and 2,7-dihydroxynaphthalenes; 9,9-bis(hydroxyphenyl]fluorene; the phenolated and cresolated monomers and oligomers of dicyclopentadiene as taught by U.S. Patent No. 3,536,734; the aminophenols, particularly 4-aminophenol; various amines such as 4,4'-, 1,4'- and 3,3'-methylenedianiline and analogues of methylenedianiline in which the methylene group is replaced with a C₁-C₄ substituted or unsubstituted lower alkyl, or -O-, -S-, -CO-, -O-CO-, -O-CO-O-, -SO₂-, or aryl group; and both amino, hydroxy, and mixed amino and hydroxy terminated polyarylene oligomers having -O-, -S-, -CO-, -O-CO-, -O-CO-O-, -SO₂-, and/ or lower alkyl groups interspersed between mono or polynuclear aryl groups as taught in U.S. Patent No. 4,175,175.

Also suitable are the epoxy resins based on the cresol and phenol novolacs. The novolacs are prepared by the condensation of phenol or cresol with formaldehyde, and typically have more than two hydroxyl groups per molecule. The glycidyl derivatives of the novolacs may be liquid, semisolid, or solid, and generally have epoxy functionalities of from 2.2 to about 8.

Hybrid resin systems may also be used. Suitable hybrid resin systems include the combination of bismaleimide and cyanate ester comonomers, epoxy and cyanate ester comonomers, and bismaleimide and epoxy comonomers, and the mixture thereof.

The binder resins of the subject invention further contain a dissolved engineering thermoplastic and/or elastomer. Such suitable thermoplastics have high strain to failure and glass transition temperatures above 150°C, preferably above 200°C. The thermoplastic mixture may be a polyimide, polyetherimide (PEI), polyethersulfone (PES), polysulfone, polyetherketone, polyetheretherketone (PEEK), polyamide, polyamideimide, or the like. PEI is preferred. Elastomers useful in the invention include flexible vinyl addition polymers including homopolymeric and copolymeric diene rubbers, derived from conjugated dienes of 4 to 8 carbons such as butadiene, isoprene, propylene, chloroprene, and the like. These include but are not limited to copolymers of such dienes with each other and with one or more of such monomers as styrene, acrylonitrile, methacrylonitrile, acrylic acid, methacrylic acid, methyl methacrylate, and the like. Butadiene-acrylonitrile polymers and carboxylic-functional butadieneacrylonitrile polymers are most preferred. Suitable fluoroelastomers are disclosed in Polym. Int., 26(2), 69-73, 1991. Suitable polysiloxane elastomers are disclosed in J Appl. Polym. Sci., 54(1),83-90, 1994.

The thermoplastic/elastomers are present in amounts from about 10 to about 60 percent by weight, preferably 20 to 40 percent by weight of the binder resin. The thermoplastic/elastomers may readily be dissolved in the thermosetting resin using a solvent, e.g. methylene chloride, and thereafter removing the solvent. The resultant material may be ground to the desired particle size; alternatively, the solution may be spray dried.

The exact quantities of thermosetting resin and thermoplastic in the binder will vary with the individual constituents. Generally, thermosetting resins are liquid and the presence of increasing amounts of dissolved thermoplastic/elastomer increases the viscosity until a solid is formed at ambient temperature. The concentration of thermoplastic is adjusted to provide a non-tacky solid having a softening point in the range 50 to 150°C, typically 60 to 120°C.

The resulting solid binder resin is non-tacky allowing it to be used in the form of a free-flowing, non-agglomerating powder. The binder resin melts or softens sufficiently at moderate temperatures in the range 50 to 150°C. This allows the binder particles to bond to the surface of fibres when they are heated in contact with the fibres and cooled. Thereafter, the binder coated fibres may be shaped and bonded together to retain the desired shape by heating within the above temperature range and cooling. Preferred combinations of thermosetting resin and thermoplastic for the binder resin used in the invention include BMI/PEI, BMI/PES and Epoxy/PEI. The matrix resin used in the RTM process is preferably the same as the thermosetting resin of the binder.

The binder resin may contain up to 20% by weight of one or more additives selected from thermally conducting particles, electrically conducting particles, flame retardants, colourants, catalysts, curing agents and coupling agents. Suitable thermal conducting particles include metal particles, suitable electrically conductive particles include graphite. Preferred flame retardants include aluminium trihydrate, zinc borate and phosphorus flame retardants. Examples of coupling agents include aminosilanes.

The reinforcing fibres used in the present invention include glass fibres, carbon fibres, aramid fibres, ceramic fibres etc. and mixtures thereof. The resin binder may be applied to individual fibre tows which are then processed into a fabric or substrate or preferably the resin binder is applied to a fabric comprising the reinforcing fibres. The resin binder may be applied to one or both surfaces of the fabric.

The binder resin may be applied in the form of a powder, generally having a particle size in the range 100 to 500µm. Any convenient powder coating technique may be employed including spray coating, electrostatic coating, drop coating etc. After application of the resin binder powder the binder is heated to a temperature in the range 50 to 150°C to soften the particles so that they bond to the fibre. The heat treatment should not be sufficient for the particles to completely melt and flow to form a continuous layer since this will deleteriously affect the drapability of the fabric. The resin binder powder is conveniently heated by passing the coated fabric under infrared lamps. Alternatively, the binder resin may be applied from solution by spraying, printing etc. to provide discrete areas of binder resin on the fibres.

The binder coated fibre of the invention may readily be draped and stacked and by application of heat and pressure so that a consolidated preform is produced which has long term ambient temperature integrity and good handleability.

The preform may be used to prepare a composite by introduction of a thermosetting matrix resin and curing the resins at a temperature of 50 to 200°C. The matrix resin may be introduced to the preform by any suitable technique. Generally, the preform is placed in a mould and the matrix resin introduced into the mould cavity to impregnate the preform.

The thermosetting resin of the binder resin and the matrix resin are preferably but not limited to the same type to ensure optimum compatibility thereby allowing full impregnation of the preform to produce a high performance composite. The presence of the dissolved thermoplastic/elastomer in the resin binder has been found to increase the toughness of the final cured composite compared to the identical composite prepared without the dissolved thermoplastic. Furthermore, other properties of the cured composite e.g. flexural strength, flexural modules, interlaminar shear strength are not deleteriously affected by the presence of the dissolved thermoplastic in the resin binder.

The invention will now be illustrated by the following Examples.

### Example 1

### Preparation of a PEI-modified bismaleimide binder

2.5kg of PEI (General Electric Ultem 1000) was dissolved in 7.5kg of methylene chloride. 7.5kg of bismaleimide resin (Cytec 5250-4 RTM resin) was added to the PEI solution and stirred until homogeneous. The methylene chloride was then removed under vacuum at 80°C. When cooled to ambient, the resultant material was a hard, glassy like solid, which was subsequently ground into a fine powder of particle size 100 to 500µm. This powder is the binder for preform manufacture.

### Example 2

### Powder coating of glass fabric

The binder powder from Example 1 was powder coated onto 7781-style glass fabric. The powder was evenly applied to one side of the fabric to give a coverage of 6% by weight. The powder coated fabric was then passed under an infrared heater which softened the powder, such that it adhered to the surface of the fabric. Other samples of fabric were coated at 1 and 3% by weight.

### Example 3

### Manufacture of a preform

The powder coated fabric from Example 2 was used to produce a helmet shaped preform. Binder coated fabric was laid up inside a female mould. This was then consolidated into shape by means of a rubber bladder inflated with steam. The heat and pressure generated by the steam softened the binder and allowed the fabric plies to tack together. The helmet shaped preform was then cooled under pressure and a rigid, well consolidated preform resulted, which had long term ambient temperature integrity.

### Example 4

### Toughness Evaluation

The interlaminar fracture toughness of a composite laminate produced from binder coated carbon fabric of the invention and a commercial bismaleimide resin, was compared with an equivalent laminate produced without binder.

To produce a binder coated fabric, an even coat of the binder of Example 1 was sprinkled by hand onto both surfaces of a 283 gsm 3K5H carbon fabric. The fabric was coated to give 3.5% by weight of binder on each side of the fabric and hence an overall binder content of 7% by weight. The fabric was then heated in an air circulation oven for 2 minutes at 120°C, to melt the binder onto the fabric. The binder coated fabric was then removed from the oven and allowed to cool to ambient temperature.

Composite laminates were produced from both the binder coated fabric and standard fabric. Bismaleimide resin films of 96 gsm were applied to either side of the two fabrics. The resultant materials were then cut into pieces measuring 16 x 12 inch (40.5 x 30.5cm). Ten plies of this material were then stacked together and consolidated under hand pressure. In the centre of this stack a FEP release film was positioned between the plies at one end in order to produce a laminate suitable for the preparation of G_{1C} test specimens according to AITM Test method 1.0005.

The preformed laminates were then cured in an autoclave moulding cycle for 6 hours at 190°C. The resultant composite laminates were then postcured in an air circulated oven for 5 hours at 245°C.

G_{1C} test specimens were prepared according to test method AITM 1.0005, with the weft fibres being aligned to the specimen in the longitudinal direction, with the weft faces being nested in the crack plane. Six specimens were cut from both laminates and tested in order to acquire data.

For the specimens without binder the value of G_{1c} obtained was 268.6 J/m².

For specimens with the binder the value of G_{1c} obtained was 419.9 J/m².

The G_{1C} are significantly higher for the specimens that included the binder and thus illustrate the increase to the toughness of the composite provided by use of the resin binder of the invention.

### Example 5

Using samples as prepared in Example 4 the following properties of the cured laminates were evaluated:

| Property | with binder | without binder |
|---|---|---|
| Flexural strength/MPa | 826.7 | 858 |
| n | 10 | 10 |
| sd | 35.9 | 35.0 |
| cv | 4.35 | 4.08 |
| Flexural Modulus/GPa | 42.1 | 42.54 |
| n | 10 | 10 |
| sd | 1.5 | 0.90 |
| cv | 3.49 | 2.11 |
| Interlaminar shear strength/MPA | 87.0 | 84.7 |
| n | 10 | 10 |
| sd | 4.1 | 3.5 |
| cv | 4.76 | 4.08 |

| Glass transition temperature/°C | | |
|---|---|---|
| sample 1 | 291.6 | 289.5 |
| sample 2 | 295.4 | 292.3 |

| | | |
|---|---|---|
| n = number of specimens tested sd = standard deviation cv = coefficient of variation | | |

Glass transition temperatures are tan δ values from dynamic mechanical thermal analysis (DMTA) measurements.

Results show that, for the properties measured, materials produced with the resin binder of the invention are not significantly different from those produced without the binder.

### Example 6

### Preparation of a PES-Modified Bismaleimide Binder

400g of PES (Victrex 5003P) was dissolved in a 1.3kg of methylene chloride. 600g of bismaleimide resin (Cycom 5250-4 RTM resin) was added to the PES solution and stirred until homogeneous. The methylene chloride was then removed under vacuum at 80°C. When cooled to ambient, the resultant material was a hard, glassy-like solid, which was subsequently ground into a powder of particle size <500 µm. This powder was suitable for powder coating and preform manufacture by the techniques described in Examples 2 and 3.

### Example 7

### Preparation of a Phenoxy Resin Modified Epoxy Binder

70g of a solid epoxy novalak resin (Ciba ECN 1273) was added to a 40% solids solution of phenoxy resin thermoplastic in methyl ethyl ketone, (Phenoxy Associates Paphen PKHS-40). A further 20g of methyl ethyl ketone was added and the mixture stirred until the epoxy novalak resin was fully dissolved. 5g of a catalyst (Anjinomoto Ajicure PN23) was then added and the mixture stirred until homogeneous. The methyl ethyl ketone solvent was then removed under vacuum at 80°C. When cooled to ambient temperature, the resultant material was a hard solid, which was subsequently ground to a particle size of <500 µm. This powder could then be used as a binder resin.

### Example 8

### Preparation of an Epoxy Binder Coated Fabric

The binder resin of Example 7 was powder coated onto 7781-style glass fabric at a coating weight of 5% as per Example 2.

### Example 9

### Manufacture of an Epoxy Binder Preform

8 pieces (30 x 15cm) of the powder-coated fabric from Example 8 were cut and stacked together. This stack of fabric was then consolidated under vacuum pressure using a vacuum bag. The vacuum bag was then placed in an oven at 80°C for 10 minutes to soften the binder and tack together the fabric plies. After cooling to ambient temperature the vacuum bag was removed and a well consolidated preform resulted, which had long term ambient temperature integrity.

### Example 10

### Toughness Evaluation

The binder of Example 6 was used to prepare G_{1c} specimens as per Example 4. Testing was performed according to the AITM 1.0005 test method. For specimens with binder a value for G_{1c} of 447.9J/m² was obtained. This compares with a value for G_{1c} of 268.6J/m² without binder. This demonstrates a significant increase to the toughness of the composite provided by use of the resin binder of the invention.

### Example 11

### Preparation of a Polysulphone Modified Epoxy Binder

25g of polysulphone (Amoco P1800) was dissolved in 100g of methylene chloride. 76g of a solid novalak resin (Ciba ECN 1273) was added to the solution and stirred until dissolved. 1g of a catalyst (Ciba DY9577) was then added and the mixture stirred until homogeneous. The methylene chloride was then removed under vacuum at 70°C. When cooled to ambient temperature the resultant material was a hard solid, which was subsequently ground to a particle size of <500µm. This powder could then be used as a binder resin.

### Example 12

### Preparation of an Epoxy Binder Coated Fabric

The binder resin of Example 11 was coated onto 3K5H carbon fabric at a coating weight of 6% following the procedure of Example 2.

### Example 13

### Manufacture of an Epoxy Binder Preform

Eight pieces (33 x 18cm) of the powder coated fabric from Example 12 were cut and stacked together. The plies were consolidated at 80°C following the procedure of Example 9. A well consolidated preform with long term ambient temperature integrity resulted.

## Claims

1. Binder coated fibres for use in making a preform for resin transfer moulding the binder coated fibres comprising from 80 to 99% by weight reinforcing fibres and from 1 to 20% by weight of a preform binder resin, said binder resin being in the form of particles or discrete areas on the surface of the reinforcing fibres, said binder resin being non-tacky at ambient temperature, having a softening point in the range 50 to 150°C and being heat curable at a temperature in the range 50 to 200°C, **characterised in that** the binder resin comprises:
from 40 to 90% by weight of the binder resin of a thermosetting resin and
from 10 to 60% by weight of the binder resin of a high molecular weight engineering thermoplastic and/or an elastomer selected from vinyl addition polymer, fluoroelastomers and polysiloxane elastomers,
the engineering thermoplastic/elastomer being dissolved in the thermosetting resin,
whereby the binder coated fibres may be draped and stacked and heated to a temperature in the range 50 to 150°C to melt the binder resin and fuse fibres together to form a consolidated preform and said preform may be used in transfer moulding to provide a product having toughness imparted by the presence of said high molecular weight engineering thermoplastic and/or elastomer.

2. Binder coated fibres as claimed in Claim 1 in which said binder resin comprises about 75% by weight of thermosetting resin/elastomer and about 25% by weight of engineering thermoplastic.

3. Binder coated fibres as claimed in Claim 1 or Claim 2 in which the thermosetting resin is selected from bismaleimide resins, cyanate resins and epoxy resins.

4. Binder coated fibres as claimed in Claim 3 in which the thermosetting resin is a bismaleimide resin.

5. Binder coated fibres as claimed in any preceding claim in which the engineering thermoplastic has a Tg of at least 150°C and is selected from polyimide, polyetherimide, polyethersulfone, polysulfone, polyetherketone, polyetheretherketone, polyamide, polyamideimide and phenoxy resin.

6. Binder coated fibres as claimed in Claim 5 in which the engineering thermoplastic is a polyetherimide, polyethersulfone or phenoxy resin.

7. Binder coated fibres as claimed in any preceding Claim in which the elastomer is a homopolymeric or copolymeric diene rubber derived from a conjugated diene having from 4 to 8 carbon atoms.

8. Binder coated fibres as claimed in Claim 7 in which the elastomers is a butadiene-acrylonitrile polymer or a carboxylic-functional butadiene acrylonitrile polymer.

9. Binder coated fibres as claimed in any preceding Claim in which the binder resin comprises up to 20% by weight of one or more additives selected from thermally conducting particles, electrically conducting particles, flame retardants, colourants, catalysts, curing agents and coupling agents.

10. Binder coated fibres as claimed in any preceding claim in which the reinforcing fibres are selected from glass fibres, carbon fibres, aramid fibres, ceramic fibres and mixtures thereof.

11. Binder coated fibres as claimed in Claim 1 in which the reinforcing fibres are in the form of a fabric.

12. Binder coated fibres as claimed in Claim 11 comprising from 90 to 97% by weight reinforcing fibres and from 3 to 10% by weight of binder resin which is coated on one surface of the fabric or on both sides of the fabric.

13. Binder coated fibres as claimed in any preceding Claim in which the binder resin is in the form of particles having a particle size of not more than 1500µm.

14. Binder coated fibres as claimed in Claim 13 in which the binder resin is in the form of particles having an average particle size in the range 100 to 500µm.

15. A binder resin for use in preparing binder coated fibres as claimed in any preceding claim, the binder : resin being in the form of a non-agglomerating free flowing powder which is a non-tacky solid at ambient: temperatures, has a softening point in the range 50 to 150°C and being heat curable at a temperature in the range 50 to 200°C and comprises:
from 40 to 90% by weight of a thermosetting resin and
from 10 to 60% by weight of a high molecular weight engineering thermoplastic and/or an elastomer which is a rubbery vinyl addition polymer with the proviso that when the engineering plastic is polyethersulfone it is present in an amount of from 20 to 60% by weight.

16. A binder resin as claimed in Claim 15 consisting of:
40 to 90% by weight of a thermosetting resin,
10 to 60% by weight of a high molecular weight engineering thermoplastic and/or an elastomer selected from vinyl addition polymer, fluoroelastomers and polysiloxane elastomers,
up to 20% by weight of one or more additives selected from thermally conducting particles, electrically conducting particles, flame retardants, colourants, catalysts, curing agents and coupling agents.

17. A binder resin as claimed in Claim 15 or Claim .16 in which the components are as defined in any one of Claims 2 to 8.

18. A binder resin as claimed in any one of Claims 15 to 17 in the form of a non-agglomerating free flowing powder having a particle size of not more than 1500µm.

19. A binder resin as claimed in Claim 18 having an average particle size in the range 100 to 500µm.

20. A method of preparing a stabilised preform for use in resin transfer moulding to impart toughness to the product of resin transfer moulding the method comprising the steps of :
providing a plurality of layers of binder coated fibres as claimed in any one of Claims 1 to 14,
forming the layers over a mould surface, heating the layers to a temperature in the range 50 to 150°C to melt the binder resin and fuse the layers together and cooling to rigidify the layers to form a preform.

21. A process for making a composite having improved toughness comprising the steps of:
providing a preform produced by the method claimed in Claim 20,
applying a thermosetting matrix resin to the preforms and curing the resins at a temperature in the range 50 to 200°C whereby a composite is formed.

22. A process as claimed in Claim 21 in which the preform is placed in a mould.

23. A process as claimed in Claim 22 in which the matrix resin is introduced into the mould containing the preform.

24. A process of making a composite as claimed in Claim 23 in which the matrix resin is of the same type as the thermosetting resin of the binder resin.

## Patentansprüche

1. Mit einem Bindemittel beschichtete Fasern zur Verwendung bei der Herstellung eines Vorformlings für das Harz-Transferpressen, wobei die mit dem Bindemittel beschichteten Fasern 80-99 Gew.-% verstärkende Fasern und 1 bis 20 Gew.-% eines Vorformling-Bindemittelharzes umfassen, wobei das Bindemittelharz in Form von Teilchen oder diskreten Bereichen auf der Oberfläche der verstärkenden Fasern vorliegt, wobei das Bindemittelharz bei Umgebungstemperatur nicht-klebrig ist, einen Erweichungspunkt im Bereich von 50 bis 150 °C aufweist und bei einer Temperatur im Bereich von 50 bis 200 °C wärmehärtbar ist, **dadurch gekennzeichnet, dass** das Bindemittelharz folgendes umfasst:
40 bis 90 Gew.-%, bezogen auf das Bindemittelharz, eines wärmehärtbaren Harzes und
10 bis 60 Gew.-%, bezogen auf das Bindemittelharz, eines hochmolekularen, technischen Thermoplasten und/oder Elastomeren, ausgewählt aus Vinyl-Additionspolymeren, Fluorelastomeren und Polysiloxan-Elastomeren,
wobei der technische Thermoplast/Elastomer im wärmehärtenden Harz gelöst ist,
wobei die mit dem Bindemittel beschichteten Fasern streckgeformt und gestapelt werden können und auf eine Temperatur im Bereich von 50 bis 150 °C zum Schmelzen des Bindemittelharzes und zum Verschmelzen der Fasern miteinander zur Bildung eines verfestigten Vorformlings erwärmt werden können und der Vorformling beim Transferpressen zur Bereitstellung eines Produkts mit zäher Beschaffenheit, die durch die Anwesenheit des hochmolekularen, technischen Thermoplasten/Elastomeren verliehen wird, verwendet werden kann.

2. Mit einem Bindemittel beschichtete Fasern nach Anspruch 1, wobei das Bindemittelharz etwa 75 Gew.-% wärmehärtendes Harz/Elastomeres und etwa 25 Gew.-% technischen Thermoplasten umfasst.

3. Mit einem Bindemittel beschichtete Fasern nach Anspruch 1 oder 2, wobei das wärmehärtende Harz aus Bismaleimidharzen, Cyanatharzen und Epoxyharzen ausgewählt ist.

4. Mit einem Bindemittel beschichtete Fasern nach Anspruch 3, wobei es sich beim wärmehärtenden Harz um ein Bismaleimidharz handelt.

5. Mit einem Bindemittel beschichtete Fasern nach einem der vorstehenden Ansprüche, wobei der technische Thermoplast einen Tg-Wert von mindestens 150 °C aufweist und aus Polyimid, Polyetherimid, Polyethersulfon, Polysulfon, Polyetherketon, Polyetheretherketon, Polyamid, Polyamidimid und Phenoxyharz ausgewählt ist.

6. Mit einem Bindemittel beschichtete Fasern nach Anspruch 5, wobei es sich beim technischen Thermoplasten um ein Polyetherimid, Polyethersulfon oder Phenoxyharz handelt.

7. Mit einem Bindemittel beschichtete Fasern nach einem der vorstehenden Ansprüche, wobei es sich beim Elastomeren um einen homopolymeren oder copolymeren Dienkautschuk handelt, der von einem konjugierten Dien mit 4 bis 8 Kohlenstoffatomen abgeleitet ist.

8. Mit einem Bindemittel beschichtete Fasern nach Anspruch 7, wobei es sich beim Elastomeren um ein Butadien-Acrylnitril-Polymeres oder um ein carboxylfunktionelles Butadien-Acrylnitril-Polymeres handelt.

9. Mit einem Bindemittel beschichtete Fasern nach einem der vorstehenden Ansprüche, wobei das Bindemittelharz bis zu 20 Gew.-% eines oder mehrerer Additive umfasst, die aus wärmeleitenden Teilchen, elektrisch leitenden Teilchen, flammhemmenden Mitteln, farbgebenden Mitteln, Katalysatoren, Härtungsmitteln und Kupplungsmitteln ausgewählt sind.

10. Mit einem Bindemittel beschichtete Fasern nach einem der vorstehenden Ansprüche, wobei die verstärkenden Fasern aus Glasfasern, Kohlenstofffasern, Aramidfasern, keramischen Fasern und Gemischen davon ausgewählt sind.

11. Mit einem Bindemmittel beschichtete Fasern nach Anspruch 1, wobei die verstärkenden Fasern in Form eines Gewebes vorliegen.

12. Mit einem Bindemittel beschichtete Fasern nach Anspruch 11, umfassend 90 bis 97 Gew.-% verstärkende Fasern und 3 bis 10 Gew.-% Bindemittelharz, mit dem eine Oberfläche des Gewebes oder beide Seiten des Gewebes beschichtet sind.

13. Mit einem Bindemittel beschichtete Fasern nach einem der vorstehenden Ansprüche, wobei das Bindemittelharz in Form von Teilchen mit einer Teilchengröße von nicht mehr als 1500 um vorliegt.

14. Mit einem Bindemittel beschichtete Fasern nach Anspruch 13, wobei das Bindemittelharz in Form von Teilchen mit einer durchschnittlichen Teilchengröße im Bereich von 100 bis 500 µm vorliegt.

15. Bindemittelharz zur Verwendung bei der Herstellung von mit einem Bindemittel beschichteten Fasern nach einem der vorstehenden Ansprüche, wobei das Bindemittelharz in Form eines nicht-agglomerierenden, frei fließenden Pulvers vorliegt, bei dem es sich um einen bei Umgebungstemperaturen nicht-klebrigen Feststoff handelt, das einen Erweichungspunkt im Bereich von 50 bis 150 °C aufweist und das bei einer Temperatur im Bereich von 50 bis 200 °C wärmehärtbar ist, sowie folgendes umfasst:
40 bis 90 Gew.-% eines wärmehärtenden Harzes und
10 bis 60 Gew.-% eines hochmolekularen, technischen Thermoplasten und/oder Elastomeren, bei dem es sich um ein kautschukartiges Vinyl-Additionspolymeres handelt, mit der Maßgabe, dass dann, wenn es sich beim technischen Kunststoff um Polyethersulfon handelt, dieses in einer Menge von 20 bis 60 Gew.-% vorliegt.

16. Bindemittelharz nach Anspruch 15, bestehend aus:
40 bis 90 Gew.-% eines wärmehärtenden Harzes,
10 bis 60 Gew.-% eines hochmolekularen, technischen Thermoplasten und/oder Elastomeren, das aus Vinyl-Additionspolymeren, Fluorelastomeren und Polysiloxan-Elastomeren ausgewählt ist, und
bis zu 20 Gew.-% eines oder mehrerer Additive, die aus wärmeleitenden Teilchen, elektrisch leitenden Teilchen, flammhemmenden Mitteln, farbgebenden Mitteln, Katalysatoren, Härtungsmitteln und Kupplungsmitteln ausgewählt sind.

17. Bindemittelharz nach Anspruch 15 oder 16, wobei die Komponenten wie in einem der Ansprüche 2 bis 8 entsprechen definiert sind.

18. Bindemittelharz nach einem der Ansprüche 15 bis 17 in Form eines nicht-agglomerierenden, frei fließenden Pulvers mit einer Teilchengröße von nicht mehr als 1500 µm.

19. Bindemittelharz nach Anspruch 18 mit einer durchschnittlichen Teilchengröße im Bereich von 100 bis 500 µm.

20. Verfahren zur Herstellung eines stabilisierten Vorformlings zur Verwendung beim Harz-Transferpressen, um dem Harz-Transferpressling eine zähe Beschaffenheit zu verleihen, wobei das Verfahren die folgenden Schritte umfasst:
Bereitstellen einer Mehrzahl von Schichten von mit einem Bindemittelharz beschichteten Fasern nach einem der Ansprüche 1 bis 14,
Formen der Schichten über einer Formoberfläche, Erwärmen der Schichten auf eine Temperatur im Bereich von 50 bis 150 °C, um das Bindemittelharz zu schmelzen und die Schichten miteinander zu verschmelzen, und
Abbkühlen, um die Schichten zur Bildung eines Vorformlings zu versteifen.

21. Verfahren zur Herstellung eines Verbundstoffes mit verbesserter Zähigkeit, umfassend die folgenden Stufen:
Bereitstellen eines Vorformlings, der nach dem Verfahren von Anspruch 20 hergestellt worden ist,
Aufbringen eines wärmehärtenden Matrixharzes auf die Vorformlinge und Härten der Harze bei einer Temperatur im Bereich von 50 bis 200 °C, wodurch ein Verbundstoff gebildet wird.

22. Verfahren nach Anspruch 21, wobei der Vorformling in eine Form gebracht wird.

23. Verfahren nach Anspruch 22, wobei das Matrixharz in die den Vorformling enthaltende Form eingeführt wird.

24. Verfahren zur Herstellung eines Verbundstoffes nach Anspruch 23, wobei das Matrixharz vom gleichen Typ wie das wärmehärtende Harz des Bindemittelharzes ist.

## Revendications

1. Fibres revêtues d'un liant utilisées pour produire une préforme pour le moulage par transfert de résine des fibres revêtues de liant comprenant de 80 à 99 % en poids de fibres de renforcement et de 1 à 20 % en poids d'une résine liante d'une préforme, ladite résine liante se présentant sous la forme de particules ou de zones individuelles sur la surface des fibres de renforcement, ladite résine liante étant non adhésive à température ambiante, présentant un point de ramollissement de l'ordre de 50 à 150° C et étant thermodurcissable à une température de l'ordre de 50 à 200° C, **caractérisées en ce que** la résine liante comprend :
de 40 à 90 % en poids de la résine liante d'une résine thermodurcissable et
de 10 à 60 % en poids de la résine liante d'un thermoplastique d'ingénierie et/ou d'un élastomère présentant un poids moléculaire élevé, choisi parmi un polymère d'addition vinylique, des fluoro-élastomères et des élastomères polysiloxane,
le thermoplastique d'ingénierie/élastomère étant dissous dans la résine thermodurcissable,
moyennant quoi les fibres revêtues de liant peuvent être drapées et superposées et
chauffées à une température de l'ordre de 50 à 150° C pour fondre la résine liante et
fusionner les fibres conjointement pour former une préforme consolidée et ladite préforme peut être utilisée dans un moulage par transfert pour fournir un produit présentant une résistance conférée par la présence dudit thermoplastique d'ingénierie et/ou élastomère présentant un poids moléculaire élevé.

2. Fibres revêtues d'un liant selon la revendication 1, dans lesquelles ladite résine liante comprend environ 75 % en poids d'une résine thermodurcissable/élastomère et environ 25 % en poids d'un thermoplastique d'ingénierie.

3. Fibres revêtues de liant selon la revendication 1 ou la revendication 2, dans lesquelles la résine thermodurcissable est choisie parmi les résines bismaléimide, les résines cyanate et les résines époxy.

4. Fibres revêtues de liant selon la revendication 3, dans lesquelles la résine thermodurcissable est une résine bismaléimide.

5. Fibres revêtues de liant selon l'une quelconque des revendications précédentes dans lesquelles le thermoplastique d'ingénierie présente une Tg d'au moins 150° C et est choisi parmi le polyimide, le polyétherimide, le polyéthersulfone, le polysulfone, la polyéthercétone, la polyéther-éthercétone, le polyamide, le polyamide-imide et la résine phénoxy.

6. Fibres revêtues de liant selon la revendication 5, dans lesquelles le thermoplastique d'ingénierie est un polyéther-imide, un polyéthersulfone ou une résine phénoxy.

7. Fibres revêtues de liant selon l'une quelconque des revendications précédentes, dans lesquelles l'élastomère est un caoutchouc diène homopolymère ou copolymère dérivé d'un diène conjugué présentant de 4 à 8 atomes de carbone.

8. Fibres revêtues de liant selon la revendication 7, dans lesquelles l'élastomère est un polymère acrylonitrile-butadiène ou un polymère acrylonitrile-butadiène à fonctionnalité carboxylique.

9. Fibres revêtues de liant selon l'une quelconque des revendications précédentes, dans lesquelles la résine liante comprend jusqu'à 20 % en poids d'un ou de plusieurs additifs choisis parmi des particules thermiquement conductrices, des particules électriquement conductrices, des ignifugeants, des colorants, des catalyseurs, des agents durcissants et des agents de couplage.

10. Fibres revêtues de liant selon l'une quelconque des revendications précédentes, dans lesquelles les fibres de renforcement sont choisies parmi les fibres de verre, les fibres de carbone, les fibres d'aramide, les fibres de céramique et leurs mélanges.

11. Fibres revêtues de liant selon la revendication 1, dans lesquelles les fibres de renforcement se présentent sous la forme d'un tissu.

12. Fibres revêtues de liant selon la revendication 11, comprenant de 90 à 97 % en poids de fibres de renforcement et de 3 à 10 % en poids de résine liante qui est appliquée sur une surface du tissu ou sur les deux côtés du tissu.

13. Fibres revêtues de liant selon l'une quelconque des revendications précédentes, dans lesquelles la résine liante se présente sous la forme de particules présentant une taille de particules qui ne dépasse pas 1500 µm.

14. Fibres revêtues de liant selon la revendication 13, dans lesquelles la résine liante se présente sous la forme de particules présentant une taille de particules moyenne de l'ordre de 100 à 500 µm.

15. Résine liante utilisée dans la préparation de fibres revêtues de liant selon l'une quelconque des revendications précédentes, la résine liante se présentant sous la forme d'une poudre non agglomérée s'écoulant librement qui est un solide non adhésif à température ambiante, présentant un point de ramollissement de l'ordre de 50 à 150° C et étant thermodurcissable à une température de l'ordre de 50 à 200° C et comprenant :
de 40 à 90 % en poids d'une résine thermodurcissable et
de 10 à 60 % en poids d'un thermoplastique d'ingénierie et/ou un élastomère de poids moléculaire élevé qui est un polymère d'addition vinylique caoutchouteux à condition que si le plastique d'ingénierie est un polyéthersulfone, il soit présent en une quantité de 20 à 60 % en poids.

16. Résine liante selon la revendication 15 comprenant :
40 à 90 % en poids d'une résine thermodurcissable,
10 à 60 % en poids d'un thermoplastique d'ingénierie et/ou d'un élastomère de poids moléculaire élevé choisi parmi un polymère d'addition vinylique, des fluoro-élastomères et des élastomères polysiloxane,
jusqu'à 20 % en poids d'un ou de plusieurs additifs choisis parmi des particules de conduction thermique, des particules de conduction électrique, des ignifugeants, des colorants, des catalyseurs, des agents durcissants et des agents de couplage.

17. Résine liante selon la revendication 15 ou la revendication 16, dans laquelle les composants sont tels que définis dans l'une quelconque des revendications 2 à 8.

18. Résine liante selon l'une quelconque des revendications 15 à 17, sous la forme d'une poudre non agglomérée s'écoulant librement, présentant une taille de particules qui ne dépasse pas 1500 µm.

19. Résine liante selon la revendication 18, présentant une taille de particules moyenne de l'ordre de 100 à 500 µm.

20. Procédé de préparation d'une préforme stabilisée pour l'utilisation pour le moulage par transfert de résine pour conférer une résistance au produit du moulage par transfert de résine, le procédé comprenant les étapes consistant à :
fournir une multiplicité de couches de fibres revêtues de liant selon l'une quelconque des revendications 1 à 14,
former les couches sur une surface moulée, chauffer les couches à une température de l'ordre de 50 à 150° C pour fondre la résine liante et fusionner les couches conjointement et refroidir pour rigidifier les couches pour former une préforme.

21. Procédé de fabrication d'un composite présentant une résistance accrue comprenant les étapes consistant à :
fournir une préforme produite par le procédé selon la revendication 20,
appliquer une résine matrice thermodurcissable aux préformes et durcir les résines à une température de l'ordre de 50 à 200° C, moyennant quoi un composite est formé.

22. Procédé selon la revendication 21, dans lequel la préforme est placée dans un moule.

23. Procédé selon la revendication 22, dans lequel la résine matrice est introduite dans le moule contenant la préforme.

24. Procédé de fabrication d'un composite selon la revendication 23, dans lequel la résine matrice est du même type que la résine thermodurcissable de la résine liante.
